# NEUE EUROPÄISCHE PATENTSCHRIFT

(11) **EP 0 783 678 B2**
(45) Veröffentlichungstag und Bekanntmachung des Hinweises auf die Entscheidung über den Einspruch: **23.05.2007**
(45) Hinweis auf die Patenterteilung: 05.12.2001
(21) Anmeldenummer: 95932683.6
(22) Anmeldetag: 07.09.1995
(51) Int. Cl.: G01M 1/02

(54) **Auswuchten eines Rades mit Innenkonturermittlung**
Wheel balancing by determining the inside contour
Equilibrage d'une roue avec détermination du contour intérieur

(30) Priorität: 08.09.1994 DE 4432016
(43) Veröffentlichungstag der Anmeldung: 16.07.1997
(73) Patentinhaber: Beissbarth GmbH, 80993 München (DE)
(72) Erfinder: BUX, Hermann, D-82343 Pöcking (DE); ROSS, Peter, D-80992 München (DE); SCHOMMER, Stefan, D-82152 Martinsried (DE); WORM, Michael, D-80992 München (DE)
(74) Vertreter: Klunker . Schmitt-Nilson . Hirsch
(86) Internationale Anmeldenummer: PCT/EP1995/003517
(87) Internationale Veröffentlichungsnummer: WO 1996/007880

(56) Entgegenhaltungen:
- EP-A- 0 565 320
- DE-A- 2 634 384
- DE-A- 4 101 921
- DE-A- 4 122 844
- DE-A- 4 229 865
- US-A- 5 054 918
- Hofmann Betriebsanleitung "Radauswuchtmaschine geodyna 88/88 m"

## Beschreibung

Die Erfindung bezieht sich auf ein Verfahren und eine Vorrichtung zum Auswuchten eines Rades.

Bei den bisherigen Vorrichtungen und Verfahren zum Auswuchten von Kraftfahrzeugrädern werden als radspezifische Daten die Nenndaten der Radfelgen eingegeben oder mittels einer Messvorrichtung ermittelt. Ein in der Wuchtvorrichtung vorgesehener Rechner ermittelt dann die Positionen und Größen der Ausgleichsgewichte. So ist aus der EP-A2-565320, der DE-A1-4229865 und der DE-A1-4101921 bekannt, den Felgenabstand, die Felgenbreite und den Raddurchmesser beim Auswuchten eines Rades abzutasten, und zusätzlich wird dann der Felgentyp eingegeben, so dass der Rechner die Unwuchtgrößen berechnen kann.

In vielen Fällen entsprechen die Nenndaten jedoch nicht den Positionen, an welchen Ausgleichsgewichte angebracht werden können. Daher müssen Ausgleichspositionen über Korrekturfaktoren ermittelt werden, die jedoch nur Mittelwerte für verschiedene Felgentypen und Größen darstellen. Durch die Verwendung dieser Mittelwerte entstehen Differenzen zwischen den errechneten und den tatsächlichen Ausgleichspositionen, was zu einem ungenügenden Auswuchtergebnis führen kann.

Aus der Europäischen Patentanmeldung EP 0 586 856 A1 ist ein Verfahren zum Unwuchtsausgleich an einem Kraftfahrzeugrad bekannt, bei welchem eine Tasteinrichtung verwendet wird, um auf der Kontur der Felge die Positionen manuell abzutasten bzw. festzulegen, an denen nach der Erfahrung des Bedieners die Ausgleichsgewichte angebracht werden sollten. Dabei wird der Taster zu den sogenannten Ausgleichsebenen geführt, wo später die Ausgleichsgewichte angebracht werden sollen. Der Nachteil dieses bekannten Verfahrens ist, dass bei der Abtastung von dem Bediener entschieden wird, in welchen Bereichen die Ausgleichsgewichte vorzusehen sind. Weiterhin ist das bekannte Verfahren nur anwendbar bei standartisierten Radformen (Standardräder, Flachbettfelgen, Steilschulterrädern etc.), die sich mit den wenigen Abtastwerten auf den einzelnen Ausgleichsebenen hinreichend charakterisieren lassen.

Die Aufgabe der Erfindung ist es, für beliebige Radformen die optimalen Ausgleichsgrößen, wie Gewicht und Positionen, für die Ausgleichsgewichte zu ermitteln, ohne dass eine Bedienperson zuvor eine Festlegung der Ausgleichsebenen treffen muß.

Die Aufgabe wird mit einem Verfahren gemäß Anspruch 1 oder mit einer Vorrichtung gemäß Anspruch 6 gelöst. Vorteilhafte Ausführungsformen sind in den Unteransprüchen gekennzeichnet.

Da dem Rechner durch die Abtastwerte die Innenkontur des Rades stetig in allen Einzelheiten bekannt ist, können auch spezielle Gegebenheiten berücksichtigt werden. So kann beispielsweise bei Klebegewichten der Rechner vorzugsweise die folgenden Kriterien bei der Optimierung der Positionen für die Ausgleichsgewichte berücksichtigen. Der Abstand zwischen inneren und äußeren Ausgleichsgewichten soll möglichst groß sein, um die Gewichtsgröße zu minimieren und die Auswuchtqualität in Hinsicht auf den Materialverbrauch, die Auswuchtgenauigkeit und den optischen Eindruck zu erhöhen. Auch sollen die Gewichte unter Vermeidung von Kanten, Ecken, Rippen, Vertiefungen usw. angebracht werden können.

Bei Einschlaggewichten kann der Rechner vorteilhaft das zur Felgenkontur gehörige Felgenhorn analysieren und daraus die exakte Position für das Einschlaggewicht bestimmen.

Vorzugsweise ist eine Anzeigeeinrichtung mit dem Rechner verbunden, auf der sowohl die ermittelte Innenkontur wie auch die durch den Rechner bestimmten optimalen Positionen der Ausgleichsgewichte an den entsprechenden Stellen der Innenkontur graphisch angezeigt werden, so dass mit Hilfe dieser Anzeige die optimalen Positionen zum Anbringen der Ausgleichsgewichte am Rad wieder aufgefunden werden können. Für den Fall, dass die vom Rechner ermittelten optimalen Positionen doch nicht den Wünschen der Bedienperson entsprechen, beispielsweise in Hinsicht auf den ästhetische Eindruck, können vorteilhaft die an der Innenkontur angezeigten Ausgleichspositionen durch die Bedienperson über eine Eingabekonsole manuell verschoben werden. Der Rechner berechnet dann erneut unter Berücksichtigung dieser Randbedingungen die erforderlichen Ausgleichsgrößen.

Die Abtastung erfolgt vorzugsweise automatisch mit Hilfe eines gesteuerten Tasters, wie beispielsweise eines motorisch bewegten Tasters. Doch selbst in einer einfachen Ausführungsform der

Erfindung, die eine manuelle Führung eines Tasters vorsieht, kann der Taster "blind" von einer Bedienperson entlang der Felge verfahren werden. Es entfällt in jedem Fall das Bücken beim Blick in das Rad zum Festlegen der Ausgleichsebenen.

Im Folgenden wird die Erfindung anhand von bevorzugten Ausführungsformen unter Bezugnahme auf die begleitenden Zeichnungen beschrieben, in welchen:
- Fig. 1: eine erste Ausführungsform einer Vorrichtung gemäß der Erfindung zeigt;
- Fig.2: eine zweite Ausführungsform der Erfindung zeigt;
- Fig.3: eine dritte Ausführungsform der Erfindung zeigt;
- Fig.4: eine vierte Ausführungsform der Erfindung zeigt; und
- Fig.5: ein Beispiel für eine optimale Positionierung der Ausgleichsgewichte gemäß der Erfindung zeigt.

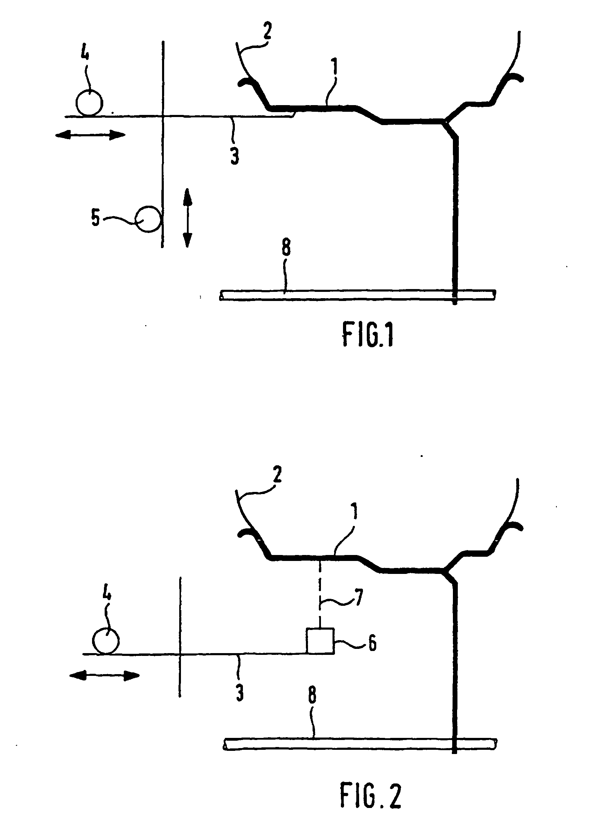

In Fig.1 ist im Querschnitt eine Felge 1 gezeigt, auf der ein Reifen 2 montiert ist. Die Felge 1 mit dem Reifen 2 ist auf einer Welle 8 drehbar gelagert. Eine Abtastvorrichtung umfaßt einen Taster 3, der durch einen Antrieb 4 in horizontaler Richtung (d.h. parallel zur Welle 8) und einen Antrieb 5 in vertikaler Richtung (d.h. senkrecht zur Welle) bewegt werden kann. Die Abtasteinrichtung 3 ist mit einem Rechner (nicht gezeigt) verbunden.

Im Betrieb wird der Taster 3 entlang der Innenkontur der Felge 1 motorisch durch die beiden Antriebe 4 und 5 verfahren, wobei die horizontale und vertikale Stellung des Tasters entweder über die Antriebe (z.B. Schrittmotoren) selbst oder durch entsprechende Sensoren (nicht gezeigt) detektiert wird. Die Ausgangssignale der Abtasteinrichtung werden an den Rechner übertragen, der aus der Gesamtheit der Signale die Innenkontur der Felge an allen Punkten ermittelt. In einer einfacheren Ausführungsform können die Antriebe 4 und 5 auch weggelassen werden, wobei der Taster dann manuell entlang der Felgenkontur geführt und die horizontale und vertikale Stellung des Tasters über Sensoren detektiert wird.

In Figur 2 ist eine zweite Ausführungsform gezeigt, die sich von der obigen Ausführung dadurch unterscheidet, dass die Abtasteinrichtung einen Entfernungsmesser 6 umfaßt, welcher manuell oder über den Antrieb 4 in horizontaler Richtung verfahrbar ist, wobei die Entfernung zwischen dem Entfernungsmesser 6 und dem jeweiligen auf der Felgenkontur angepeilten Punkt erfaßt wird. Aus dieser Messung ermittelt dann der Rechner die gesamte Felgenkontur des Rades und bezieht diese in die Berechnung der Ausgleichsgrößen mit ein.

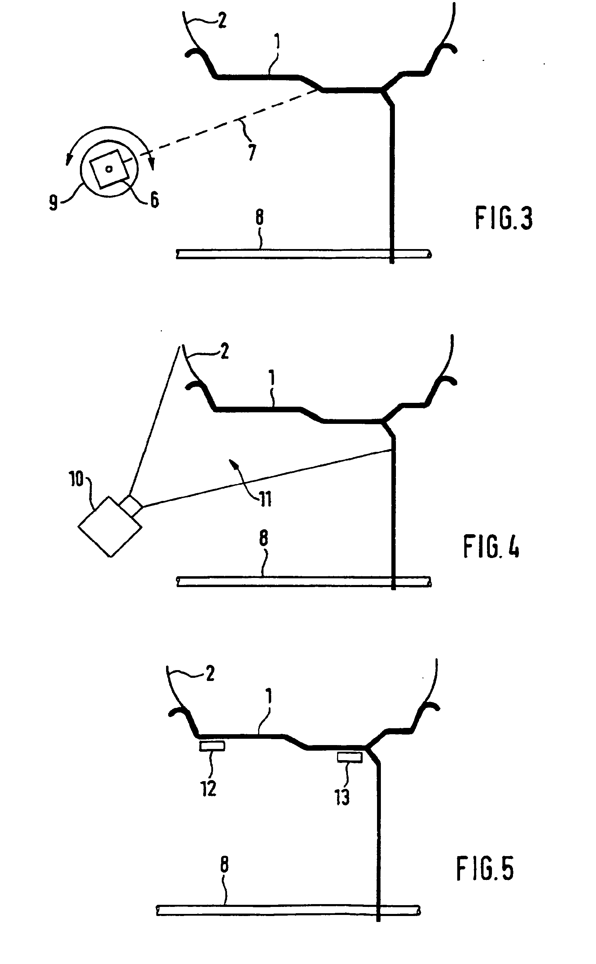

In der Ausführungsform von Figur 3 ist der Entfernungsmesser 6 schwenkbar gelagert, wobei die Bewegungen in horizontaler und vertikaler Richtung durch eine Schwenkbewegung mit einem entsprechenden Schwenkantrieb 9 ersetzt sind. Auch hier wird die Entfernung zwischen dem Entfernungsmesser 6 und dem jeweiligen auf der Felgenkontur angepeilten Punkt erfaßt und aus dieser Messung ermittelt dann der Rechner die gesamte Felgenkontur des Rades und bezieht diese in die Berechnung der Ausgleichsgrößen mit ein.

Der Entfernungsmesser 6 zur Messung der Entfernung zu dem jeweiligen auf der Felgenkontur angepeilten Punkt kann ein mechanischer, optischer, mit Ultraschall arbeitender oder elektrischer (induktiv oder kapazitiv arbeitender) Entfernungsmesser sein.

In Figur 4 ist statt des Entfernungsmessers 6 eine Kamera 10 vorgesehen, deren Bildaufnahmebereich 11 so gewählt ist, dass die Innenkontur der Felge vollständig erfaßt wird. Die Kamera muß dadurch nicht mehr hin und herbewegt oder geschwenkt werden. Die Kamera setzt das erfaßte Bild in elektrische Signale um, die in dem angeschlossenen Rechner in der Weise verarbeitet werden, dass aus dem Bild des erfaßten Teils der Felge die Innenkontur ermittelt wird.

In Figur 5 ist ein Beispiel für die Anbringung von versteckten Klebegewichten gezeigt, deren optimale Position 12 und 13 gemäß der Erfindung bestimmt wurde.

Bei allen Ausführungsformen kann eine Anzeigeeinrichtung (nicht gezeigt) vorgesehen sein, die mit dem Rechner verbunden ist und sowohl die ermittelte Innenkontur wie auch die durch den Rechner bestimmten, optimalen Ausgleichsgrößen an den entsprechenden Stellen der Innenkontur graphisch anzeigt, so dass mit Hilfe der Anzeige die optimalen Positionen zum Anbringen der Ausgleichsgewichte an der Radfelge aufgefunden werden können.

## Patentansprüche

1. Verfahren zum Auswuchten eines Rades mit Hilfe von Ausgleichsgewichten,
wobei die Felgenkontur einschließlich der Innenkontur der Radfelge abgetastet und die Abtastwerte einem Rechner zugeführt werden,
und wobei der Rechner aus diesen Abtastwerten eine Innenkontur der Felge ermittelt und aus der ermittelten Innenkontur in Verbindung mit einer Messung der Radunwucht die optimalen Ausgleichsgrößen, insbesondere Positionen und Größen der Ausgleichsgewichte, an den entsprechenden Stellen der Innenkontur bestimmt.

2. Verfahren nach Anspruch 1, wobei auf einer Anzeigeeinrichtung sowohl die ermittelte Innenkontur wie auch die durch den Rechner bestimmten optimalen Ausgleichsgrößen, insbesondere Positionen und Größen der Ausgleichsgewichte, an den entsprechenden Stellen der Innenkontur graphisch angezeigt werden.

3. Verfahren nach Anspruch 2, wobei die an der Innenkontur angezeigten Ausgleichspositionen durch eine Bedienperson über eine Eingabekonsole manuell verschiebbar sind, und wobei diese Verschiebungen als Randbedingung bei der Berechnung der Ausgleichsgrößen vom Rechner berücksichtigt werden.

4. Verfahren nach einem der Ansprüche 1 bis 3, wobei die Abtastung des Rades eine Bilderfassung einschließt, bei welcher Bilder in elektrische Signale umgesetzt werden, dass der sichtbare Teil der Felge als Bild in der Bilderfassungseinheit abgebildet wird, und wobei das Ergebnis der Bilderfassung dem Rechner zugeführt wird, der aus dem Bild des sichtbaren Teils der Felge die Innenkontur ermittelt.

5. Verfahren nach einem der Ansprüche 1 bis 4, wobei die Abtastung des Rades durch Messung einer Entfernung zwischen einem Entfernungsmesser und angepeilten Punkten auf der Innenkontur der Radfelge erfolgt.

6. Vorrichtung zum Auswuchten eines Rades mit Hilfe von Ausgleichsgewichten, umfassend
eine Unwuchtsmesseinrichtung zum Messen der Unwucht des Rades,
eine Abtasteinrichtung zur Abtastung der Kontur der Radfelge, und
einen Rechner, der mit der Abtasteinrichtung und der Unwuchtsmesseinrichtung verbunden ist,
wobei die Abtasteinrichtung (3) geeignet ist, die Innenkontur der Radfelge (1) abzutasten, und
wobei der Rechner so ausgerüstet ist, dass aus den Ausgangssignalen der Abtasteinrichtung die Innenkontur des Rades und aus der ermittelten Innenkontur in Verbindung mit Messwerten von der Unwuchtsmesseinrichtung die optimalen Ausgleichsgrößen für die Ausgleichsgewichte, insbesondere Positionen und Größen der Ausgleichsgewichte, an den entsprechenden Stellen der Innenkontur bestimmbar sind.

7. Vorrichtung nach Anspruch 6, wobei eine Anzeigeeinrichtung vorhanden ist, die mit dem Rechner verbunden ist und sowohl die ermittelte Innenkontur wie auch die durch den Rechner bestimmten, optimalen Ausgleichsgrößen an den entsprechenden Stellen der Innenkontur graphisch anzeigt.

8. Vorrichtung nach Anspruch 6 oder 7, wobei die Abtasteinrichtung (3) einen Taster umfaßt, der manuell über die Radfelge (1) geführt wird, und dass Detektoren zur Erfassung der räumlichen Bewegung des Tasters vorgesehen sind, deren Ausgangssignale vom Rechner erfaßt werden.

9. Vorrichtung nach Anspruch 6 oder 7, wobei die Abtasteinrichtung (3) einen Taster umfaßt, der durch motorische Antriebe (4, 5) bewegbar ist.

10. Vorrichtung nach Anspruch 8 oder 9, wobei die Abtasteinrichtung (3) einen Taster umfaßt, der einen Entfernungsmesser (6) aufweist, der die Entfernung zwischen dem Taster und einem angepeilten Punkt auf der Innenkontur der Radfelge mißt.

11. Vorrichtung nach Anspruch 10, wobei der Entfernungsmesser (6) schwenkbar ist, und wobei Detektoren zur Erfassung der Schwenkbewegung des Entfernungsmessers (6) vorgesehen sind, deren Ausgangssignale vom Rechner erfaßt werden.

12. Vorrichtung nach einem der Ansprüche 9 bis 11, wobei Rechner eine Steuereinrichtung zur Steuerung der Bewegung des Tasters umfaßt.

13. Vorrichtung nach Anspruch 6 oder 7, wobei die Abtasteinrichtung (3) eine Bilderfassungseinheit (10) umfaßt.

14. Vorrichtung nach Anspruch 13, wobei die Bilderfassungseinheit (10) eine Kamera umfaßt, die die Innenkontur des Rades aufnimmt, wobei die Ausgangssignale der Kamera von dem Rechner zur Ermittlung der Innenkontur nutzbar sind.

## Claims

1. A method for the balancing of a wheel with the aid of balancing weights,
wherein the rim outline including the inner outline of the wheel rim is sensed and the data produced by sensing are supplied to a computer, and
wherein the computer from such data produced by sensing finds the inner outline of the rim and ascertains on the basis of the inner outline as found in conjunction with measurement of the wheel imbalance the optimum balancing data, particularly the positions and sizes of the balancing weights at the corresponding positions on the inner outline.

2. The method as set forth in claim 1, wherein on a display means both the inner outline as ascertained and also the optimum balancing data as ascertained by the computer, and more particularly the positions and sizes of the balancing weights, are displayed graphically at the corresponding positions on the inner outline.

3. The method as set forth in claim 2, wherein on a display the balancing positions indicated on the inner outline are able to be manually shifted by an operator using an input console and wherein such shifting is taken into account as marginal conditions in the calculation of the balancing data by the computer.

4. The method as set forth in any one of the claims 1 through 3, wherein the sensing of a wheel includes image production, in which images are converted into electrical signals, wherein the visible part of the rim is presented as an image in the image production means and wherein the result of the image production is supplied to the computer, which ascertains the inner outline on the basis of the image of the visible part of the rim.

5. The method as set forth in any one of the claims 1 through 4, wherein the sensing of the wheel is performed by the measurement of a distance between an distance measuring means and a target point on the inner outline of the wheel rim

6. An apparatus for balancing a wheel with the aid of balance weights, comprising:
an imbalance measuring means for the measurement of the imbalance of the said wheel,
a feeler means for sensing the outline of the wheel rim, and
a computer, which is connected with the feeler means and the imbalance measuring means,
wherein the feeler means (3) is adapted to sense the inner outline of the wheel rim (1) and wherein the computer is so designed that from the output signals of the sensing means the inner outline of the wheel may be found and from the inner outline so found, in conjunction with measurement data from the imbalance measuring means the optimum balancing data for the balancing weight, particularly the positions and sizes of the balancing weights at the corresponding positions on the inner outline may be derived.

7. The apparatus as set forth in claim 6, comprising a display means, which is connected with the computer and graphically displays both the inner outline as ascertained and also the optimum balancing data, as set by the computer, at the corresponding positions on the inner outline.

8. The apparatus as set forth in claim 6 or claim 7, wherein the sensing means (3) comprises a feeler, which is moved manually along the wheel rim (1) and wherein detectors are provided for detecting three-dimensional movement of the feeler, output signals of such detectors being processed by the computer.

9. The apparatus as set forth in claim 6 or claim 7, wherein the sensing means (3) comprises a feeler, which is able to be moved by power drives (4 and 5).

10. The apparatus as set forth in claim 8 or claim 9, wherein the sensing means (3) comprising a feeler, which possesses a distance measuring means (6), which measures the distance between the feeler and a target point on the inner outline of the wheel rim.

11. The apparatus as set forth In claim 10, wherein the distance measuring means (6) is pivotally mounted and wherein detectors are provided for the pivotal means of the distance measuring means (6), whose output signals are processed by the computer.

12. The apparatus as set forth in any one of the claims 9 through 11, wherein the computer comprises control means for the control of the movement of the feeler.

13. The apparatus as set forth in claim 6 or claim 7, wherein the sensing means (3) comprises an image detecting unit (10).

14. The apparatus as set forth in claim 13, wherein the image detecting unit (10) comprises a camera, which produces images of the inner outline of the wheel, the output signals of the camera being able to be utilized by the computer to ascertain the inner outline.

## Revendications

1. Procédé d'équilibrage d'une roue, à l'aide de poids d'équilibrage, dans lequel le contour de la jante y compris le contour intérieur de la jante de roue est exploré et les valeurs obtenues sont fournies à un ordinateur, et dans lequel l'ordinateur établit, à partir de ces valeurs obtenues, un contour intérieur de la jante, et détermine les grandeurs optimales d'équilibrage, notamment les positions et les tailles des poids d'équilibrage, aux emplacements correspondents du contour intérieur, à partir du contour intérieur établi, en liaison avec une mesure du déséquilibre de la roue.

2. Procédé selon la revendication 1, dans lequel un dispositif afficheur présente, sous une forme graphique, aussi bien le contour intérieur établi que les grandeurs optimales d'équilibrage, determinées par l'ordinateur, notamment les positions et les tailles des poids d'équilibrage, aux emplacements correspondents du contour intérieur.

3. Procédé selon la revendication 2, dans lequel les positions d'équilibrage, indiquées au niveau du contour intérieur, peuvent être deplacées à la main par un opérateur par l'intermédiaire d'un pupitre de commande d'entrée, et dans lequel ces déplacements sont pris en compte, en tant que condition secondaire, par l'ordinateur lors du calcul des grandeurs d'equllibrage.

4. Procédé selon l'une des revendications 1 à 3, dans lequel l'exploration de la roue comporte une prise d'images, les images étant converties en signaux électriques, de telle sorte que la partie visible de la jante soit représentée, en tant qu'image, dans l'unité de prise d'images, et le résultat de la prise d'images étant fourni à l'ordinateur, qui établit le contour intérieur, à partir de l'image de la partie visible de la jante.

5. Procédé selon l'une des revendications 1 à 4, dans lequel l'exploration de la roue s'effectue par la mesure d'une distance entre un télémètre et des points relevés sur le contour intérieur de la jante de roue.

6. Dispositif d'équilibrage d'une roue, à l'aide de poids d'équilibrage, comprenant un dispositif de mesure de déséquilibre, servant à mesurer le déséquilibre de la roue,
un dispositif d'exploration, prevu pour l'exploration le contour de la jante de roue, et
un ordinateur, qui est relié au dispositif d'exploration et au dispositif de mesure de déséquilibre,
dans lequel le dispositif d'exploration (3) est propre à explorer le contour intérieur de la jante de roue (1), et dans lequel l'ordinateur est équipé de telle sorte que puissent être déterminés, à partir des signaux de sortie du dispositif d'exploration, le contour intérieur de la roue et, à partir du contour intérieur établi, en liaison avec les valeurs mesurées par le dispositif de mesure de déséquilibre, les grandeurs optimales d'équilibrage pour les poids d'équilibrage, notamment les positions et les tailles des poids d'équilibrage aux emplacements correspondents du contour intérieur.

7. Dispositif selon la revendication 6, dans lequel il est prévu un dispositif afficheur, qui est relié à l'ordinateur et qui presente, sous une forme graphique, aussi bien le contour intérieur établi que les grandeurs optimales d'équilibrage, déterminées par l'ordinateur, aux emplacements correspondants du contour intérieur.

8. Dispositif selon la revendication 6 ou 7, dans lequel le dispositif d'exploration (3) comprend un palpeur, qui est guidé à la main sur la jante de roue (1), et dans lequel il est prévu des détecteurs pour détecter le mouvement dans l'espace du palpeur, et dont les signaux de sortie sont fournis à l'ordinateur.

9. Dispositif selon la revendication 6 ou 7, dans lequel le dispositif d'exploration (3) comprend un palpeur, qui peut être déplacé par des dispositifs d'entraînement par moteur (4, 5).

10. Dispositif selon la revendication 8 ou 9, dans lequel le dispositif d'exploration (3) comprend un palpeur, qui présente un télémètre (6) mesurant la distance entre le palpeur et un point relevé sur le contour intérieur de la jante de roue.

11. Dispositif selon la revendication 10, dans lequel le télémètre (6) est pivotant, et dans lequel il est prévu des détecteurs pour la détection du mouvement de pivotement du télémètre (6) et dont les signaux de sortie sont saisis par l'ordinateur.

12. Dispositif selon l'une des revendications 9 à 11, dans lequel l'ordinateur comprend une unité de commande pour la commande du mouvement du palpeur.

13. Dispositif selon la revendication 6 ou 7, dans lequel le dispositif d'exploration (3) comprend une unité de prise d'images (10).

14. Dispositif selon la revendication 13, dans lequel l'unité de prise d'images (10) comprend une caméra, qui prend des vues du contour intérieur de la roue, et dans lequel les signaux de sortie de la caméra sont utilisables par l'ordinateur pour la détermination du contour intérieur.
